# FASCICULE DE BREVET EUROPEEN

(11) **EP 0 821 175 B1**
(45) Date de publication et mention de la délivrance du brevet: **04.09.2002**
(21) Numéro de dépôt: 97111604.1
(22) Date de dépôt: 09.07.1997
(51) Int. Cl.: F16D 23/04, B21D 53/16

(54) **Bague de synchronisation pour un synchroniseur de boîte de vitesses**
Synchronring für eine Getriebe-Synchronisiereinrichtung
Synchronizer ring for a gearbox synchronizer

(30) Priorité: 24.07.1996 FR 9609412
(43) Date de publication de la demande: 28.01.1998
(73) Titulaire: VALEO, 75017 Paris (FR)
(72) Inventeur: Boutaud, Jean-Pierre, 87350 Panazol (FR); Luquet, Philippe, 87000 Limoges (FR); Menard, Denis, 87000 Limoges (FR)

(56) Documents cités:
- EP-A- 0 159 080
- EP-A- 0 453 167
- EP-A- 0 717 212
- DE-A- 3 735 978
- DE-C- 3 637 386
- FR-A- 2 582 769

## Description

La présente invention concerne une bague de synchronisation pour un synchroniseur de boîte de vitesses.

Dans une boîte de vitesses à rapports multiples, lors du passage des vitesses, le synchronisme nécessaire entre le manchon baladeur, qui tourne à la vitesse de l'arbre de sortie, et le pignon correspondant est réalisé par un système de synchronisation à friction ou frottement.

Selon un exemple connu d'une conception d'un dispositif de synchronisation, celui-ci est équipé d'un moyeu ou manchon qui est relié par des cannelures à l'arbre secondaire. Sur ce moyeu peut coulisser axialement le baladeur. De chaque côté, le moyeu est pourvu d'une bague de synchronisation comportant par exemple un cône intérieur de frottement. Le cône de la bague et le cône extérieur complémentaire du pignon forment ensemble un accouplement conique qui produit, par friction/frottement, le synchronisme, c'est-à-dire l'entraînement en rotation du pignon fou en vue de l'engagement de la vitesse correspondante.

Les dentures et les surfaces de friction des engrenages sont en acier traité et elles sont par exemple recouvertes de molybdène. Selon une conception connue des bagues de synchronisation, elles sont réalisées sous la forme d'éléments massifs métalliques et usinés, les cônes intérieurs et les anneaux étant par exemple en bronze, en alliage d'aluminium ou en acier fritté.

Cette conception d'une bague de synchronisation massive en une seule pièce présente plusieurs inconvénients.

Tout d'abord, chaque bague est d'un poids et d'une inertie relativement élevés.

La fabrication des bagues par usinage fait appel à de nombreuses étapes de reprises d'usinage et est donc particulièrement longue et coûteuse.

Enfin, la rigidité nécessaire de chaque bague de synchronisation ne permet pas d'en réduire les dimensions et la masse.

Dans le document EP-A- 0 717 212 on a proposé une nouvelle conception d'une bague de synchronisation qui remédie aux inconvénients qui viennent d'être mentionnés.

Dans ce document, conforme au préambule de la revendication 1, la bague de synchronisation pour un synchroniseur de boîte de vitesses comporte au moins une surface de portée tronconique susceptible de coopérer par friction avec une surface de portée complémentaire appartenant à un autre composant. Cette surface de portée tronconique appartient à une couche de matériau, notamment de matériau de frottement, rapportée sur un corps de forme générale annulaire tronconique réalisé par formage d'un flan de tôle.

Un problème de précision géométrique de la surface de portée tronconique se pose du fait de la réalisation par farinage du corps. Conformément à l'invention ce problème est résolu par la partie caractérisante de la revendication 1.

Selon d'autres caractéristiques de l'invention :
- le corps tronconique en tôle délimite au moins une face latérale tronconique qui est revêtue d'une couche de matériau de frottement, d'épaisseur sensiblement constance ;
- la face latérale tronconique externe du corps est revêtue d'une couche de matériau de frottement ;
- la face latérale tronconique interne du corps est revêtue d'une couche de matériau ;
- les deux faces latérales tronconiques sont revêtues d'une couche de matériau de frottement ;
- ladite surface de portée comporte une série de rainures, en particulier d'orientation sensiblement axiale, formées par moulage dans l'épaisseur de la couche de matériau ;
- le corps annulaire tronconique en tôle est délimité axialement par deux bords d'extrémités, et il comporte au moins une partie fonctionnelle supplémentaire, réalisée venue de matière par formage, qui s'étend depuis l'un de ses bords d'extrémités ;
- ladite partie fonctionnelle comporte au moins une collerette d'orientation sensiblement radiale ;
- la collerette s'étend radialement vers l'extérieur et comporte des dents à sa périphérie ;
- la collerette s'étend radialement vers l'extérieur depuis le bord d'extrémité de plus grand diamètre du corps annulaire tronconique ;
- la collerette s'étend radialement vers l'intérieur et comporte des moyens pour la fixation du corps annulaire tronconique sur un autre élément, notamment sur des moyens d'entraînement en rotation de la bague ;
- la collerette s'étend radialement vers l'intérieur depuis le bord d'extrémité de plus grand diamètre du corps annulaire tronconique ;
- la collerette s'étend radialement vers l'intérieur depuis le bord d'extrémité de plus petit diamètre du corps annulaire tronconique ;
- ladite partie fonctionnelle comporte au moins une patte d'orientation sensiblement axiale
- ladite partie fonctionnelle comporte au moins une patte d'orientation radiale.
- ladite patte s'étend axialement sensiblement le long de la face latérale tronconique externe du corps en tôle pour constituer un bossage d'appui et de positionnement axial de la bague ;
- la patte est une patte d'entraînement en rotation de la bague qui s'étend depuis le bord d'extrémité de plus petit diamètre du corps annulaire tronconique, en direction de l'axe de révolution de la bague de synchronisation ;
- le corps annulaire tronconique est réalisé par découpe, emboutissage et/ou repoussage d'un flan de tôle d'acier ;
- une couche d'adhésif ou de colle est interposée entre le corps annulaire tronconique et la couche de matériau.

L'invention formulée ci-dessus permet non seulement de résoudre les problèmes précités mais en outre présente des avantages supplémentaires.

En effet, les bagues de synchronisation connues étant rigides, elles nécessitent une finition très soignée afin d'assurer un bon contact avec le contre-matériau sur lequel elles viennent en contact de friction.

Toute déformation des bagues connues, d'origine mécanique ou thermique, peut entraîner une détérioration rapide des surfaces de frottement et conduire à un grippage du synchroniseur.

Grâce à l'invention ce risque est éliminé en raison de l'existence d'une certaine déformabilité du matériau de frottement rapporté sur l'une et/ou l'autre des faces latérales de la bague de synchronisation.

L'invention permet en outre d'atteindre une meilleure efficacité dans la synchronisation grâce à une rupture plus rapide du film d'huile à l'engagement de la bague de synchronisation sur le contre-matériau.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un premier exemple de réalisation d'une bague de synchronisation conforme aux enseignements de l'invention ;
- la figure 2 est une vue axiale en bout de la bague de synchronisation de la figure 1 ;
- la figure 3 est une vue en section selon la ligne 3-3 de la figure 2 ;
- les figures 4 et 5 sont des vues à plus grande échelle des détails D4 et D5 de la figure 2 ;
- la figure 6 est une vue à plus grande échelle du détail D6 de la figure 3, le plan de section passant alors par une des rainures de la couche de matériau de frottement ;
- la figure 7 est une vue en perspective d'une bague de synchronisation à double cône réalisée conformément aux enseignements de l'invention ;
- la figure 8 est une vue axiale en bout de la bague de synchronisation de la figure 7 ;
- la figure 9 est une vue en section selon la ligne 9-9 de la figure 8 ;
- la figure 10 est une vue à plus grande échelle en section selon la ligne 10-10 de la figure 8 ;
- la figure 11 est une vue en perspective d'un troisième exemple de réalisation d'une bague de synchronisation conforme aux enseignements de l'invention ;
- la figure 12 est une vue axiale en bout de la bague de synchronisation de la figure 11 ;
- la figure 13 est une vue en section selon la ligne 13-13 de la figure 12 ;
- la figure 14 est une vue en section à plus grande échelle selon la ligne 14-14 de la figure 12 ;
- la figure 15 est une vue à plus grande échelle du détail D15 de la figure 13 ;
- les figures 16A, 16B et 16C sont des schémas permettant de comparer deux variantes de réalisation de la bague de synchronisation représentée aux figures 11 à 15 avec une bague massive selon l'état de la technique;
- la figure 17 est une vue partielle de face du corps en tôle sur laquelle on a représenté une variante de réalisation des dents périphériques;
- la figure 18 est une vue en section selon la ligne 18-18 de la figure 17;

la figure 19 est une vue partielle de derrière du corps en tôle sur laquelle on a représenté une variante de réalisation des bossages d'appui et de positionnement axial de la bague; et
la figure 20 est une vue en section selon la ligne 20-20 de la figure 19.

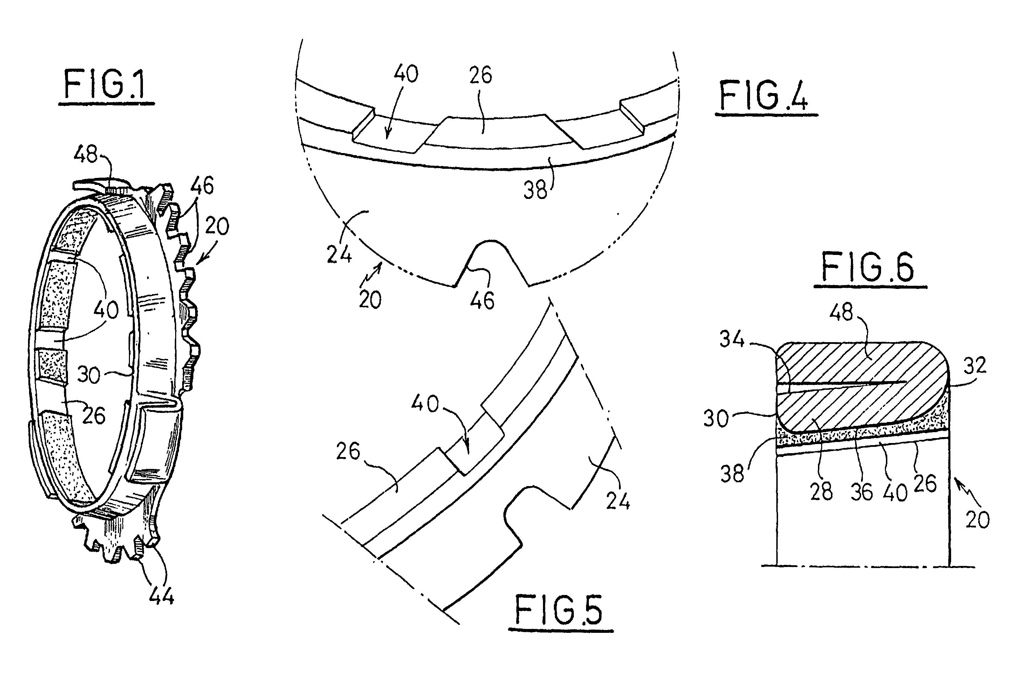

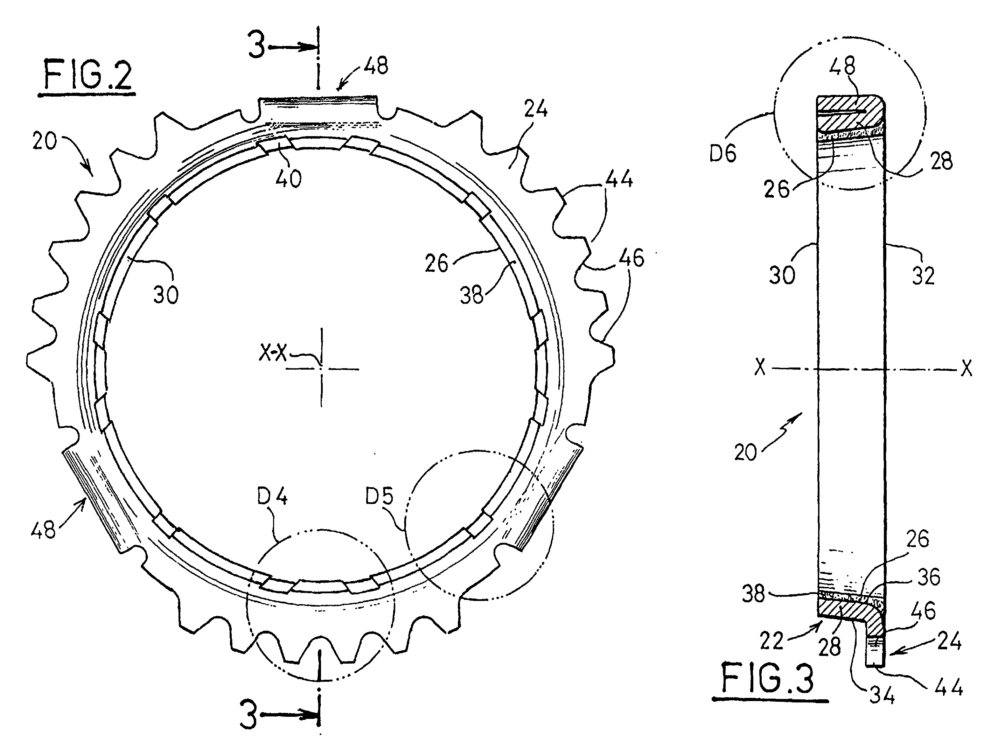

On a représenté aux figures 1 à 6 une bague de synchronisation de conception générale connue.

Cette bague de synchronisation 20 est constituée pour l'essentiel par une partie de forme générale tronconique 22 qui comporte une surface tronconique de portée 26 et par une partie complémentaire 24 pour l'entraînement en rotation de la bague 20, qui est ici réalisée sous la forme d'un collet radial extérieur.

Conformément aux enseignements de l'invention, la bague de synchronisation 20 est constituée pour l'essentiel par un corps de forme générale annulaire tronconique 28 qui est réalisé par formage à partir d'une tôle d'acier, en mettant en oeuvre les techniques connues de formage, notamment la découpe, l'emboutissage et le repoussage.

Le corps 28 est ainsi de forme générale tronconique, d'axe X-X, et il est délimité axialement par un bord d'extrémité axiale de petit diamètre 30 et par un bord d'extrémité axiale de grand diamètre 32.

Le corps annulaire tronconique 28 est délimité par une face latérale conique externe 34 et par une face latérale conique interne 36.

Dans l'exemple de réalisation représenté aux figures 1 à 6, et conformément aux enseignements de l'invention, c'est la face latérale conique interne 36 du corps 28 qui est revêtue d'une couche 38. de matériau de frottement dont la surface périphérique interne tronconique constitue la surface de portée de frottement 26, aussi appelée cône de friction, de la bague de synchronisation 20 et qui est destinée à coopérer avec une surface conique convexe complémentaire, qui est par exemple agencée sur le pignon fou du synchroniseur de boîte de vitesses auquel appartient la bague de synchronisation 20.

Conformément aux enseignements de l'invention, la couche de matériau de frottement 38 est réalisée par surmoulage sur le corps métallique 28, la géométrie précise de la surface de portée tronconique 26 étant obtenue par moulage, c'est-à-dire qu'elle ne dépend pas de la précision de réalisation par formage du corps annulaire 28 qui constitue un insert dans le moule, mais qu'elle dépend uniquement de la précision du moule.

Le matériau de frottement utilisé pour la réalisation du cône de friction 26 doit être un matériau de frottement moulable et susceptible de travailler dans l'huile.

Un tel exemple d'un matériau de frottement et de son procédé d'obtention sont décrits et représentés dans le document WO-A-95/26473.

Afin d'améliorer la tenue de la couche de matériau de frottement moulée sur le corps annulaire en tôle d'acier 28, il est possible de procéder à un dépôt préalable d'une résine sur le corps 28, ou sur le matériau de frottement, avant l'opération de surmoulage.

Le dépôt peut être réalisé par immersion de la pièce métallique dans un bain de résine, par projection de cette dernière sur la surface destinée à être revêtue de la couche du matériau 28, ou par tout autre procédé de dépose, par exemple au rouleau.

Selon un aspect connu des cônes de friction, la surface de portée tronconique concave 26 peut comporter une série de rainures 40 d'orientation sensiblement axiale.

Les rainures 40 sont ici avantageusement réalisées venues de matière par moulage avec la couche de matériau de frottement 38.

La collerette d'entraînement 24 est réalisée venue de matière par découpe et emboutissage avec le corps annulaire tronconique 28 et elle s'étend radialement vers l'extérieur depuis le bord d'extrémité axiale de grand diamètre 32 de ce dernier.

Le bord périphérique 44 de la collerette 24 comporte des dents 46 susceptibles de coopérer avec des dents complémentaires du manchon baladeur du synchroniseur.

Les bossages d'appui et de positionnement axial de la bague de synchronisation 20 sont aussi réalisés venus de matière avec le corps annulaire tronconique 28.

Ces bossages sont ici au nombre de trois et ils sont réalisés sous la forme de pattes 48 qui s'étendent depuis le bord d'extrémité axiale de plus grand diamètre 32 du corps annulaire tronconique 28 de la bague de synchronisation 20 et qui sont rabattues sensiblement à 180° pour s'étendre axialement le long de la surface tronconique externe 34 du corps annulaire 28.

Les bossages sont ainsi réalisés par découpe, emboutissage et pliage, c'est-à-dire que leur réalisation ne doit faire appel à aucune opération supplémentaire d'usinage.

La bague de synchronisation 20 illustrée aux figures 1 à 7 peut être réalisée à faible coût. Elle présente une masse et une inertie fortement réduites par rapport aux bagues connues de synchronisation à structure massive, et sa réalisation ne nécessite aucune opération d'usinage.

Par ailleurs, comme la dureté de l'acier matricé est supérieure à celle d'un acier fritté ou à celle des laitons utilisés pour la réalisation des bagues de synchronisation massives, il est possible de réduire le nombre des dents 46.

De plus, la réalisation des rainures 40 par moulage permet, si nécessaire, de nombreuses possibilités quant à leurs dimensions et à leurs formes et orientations.

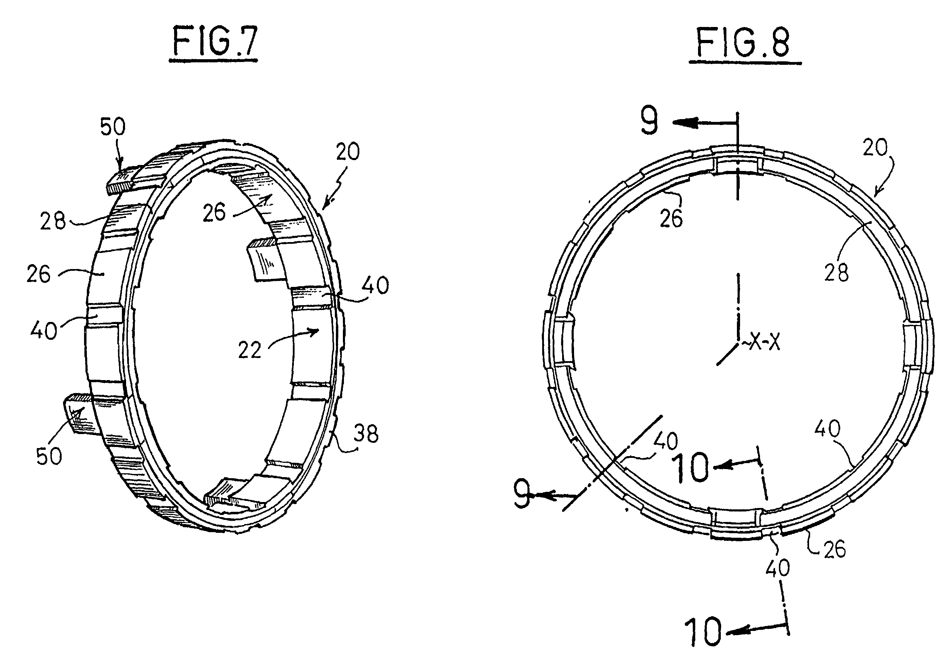

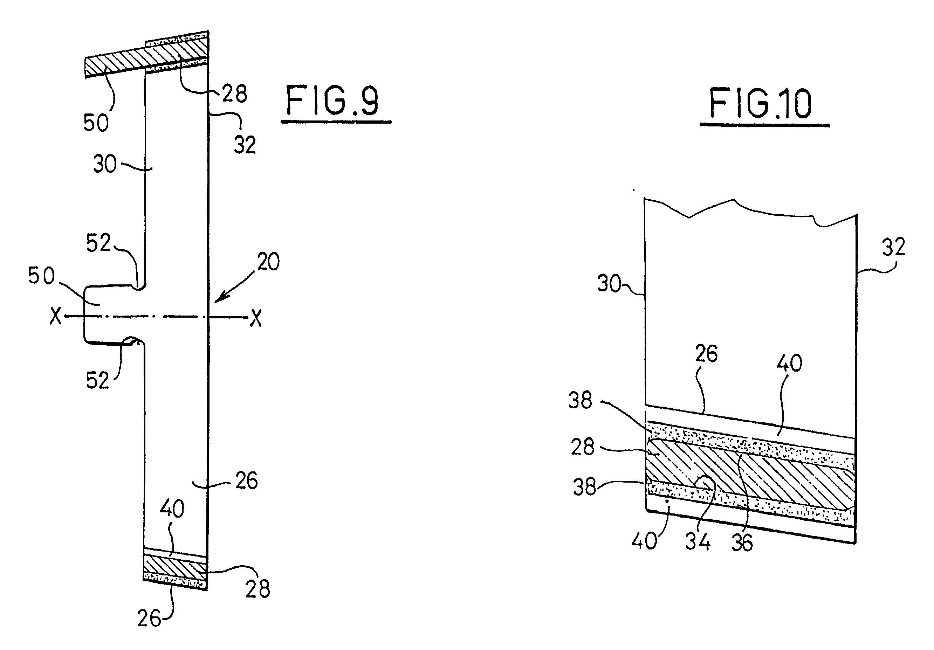

On a représenté aux figures 7 à 10 une bague ou anneau de synchronisation à double cône de friction.

En effet, selon une conception connue, la bague 20 comporte deux surfaces tronconiques de portée 26 qui sont deux surfaces d'axe commun X-X et qui sont sensiblement parallèles entre elles.

Conformément aux enseignements de l'invention, les deux surfaces tronconiques intérieure et extérieure sont constituées par les surfaces périphériques de deux couches 38 de matériau de frottement qui sont surmoulées sur un corps annulaire tronconique 28 qui est lui-même réalisé par formage d'une pièce en tôle.

Les deux surfaces intérieure et extérieure 26 comportent des rainures axiales 40 réalisées venues de matière par moulage avec les couches 38.

Cette réalisation par surmoulage d'un matériau de frottement autour d'un insert métallique 28 permet de conférer aux surfaces fonctionnelles de portée 26 la plus grande précision géométrique possible, et ceci sans aucune opération d'usinage, ni reprise d'usinage après le moulage.

Pour son entraînement en rotation, la bague de synchronisation 20 comporte ici quatre pattes d'entraînement en rotation 50 qui sont réalisées venues de matière par formage avec le corps annulaire tronconique 28.

Chaque patte 50 s'étend axialement à partir du bord d'extrémité axiale 30 de petit diamètre du corps 28 en direction de l'axe X-X et, dans le mode de réalisation illustré aux figures, selon une orientation conique sensiblement dans le prolongement du corps 28.

En variante non représentée, chaque patte 50 s'étend axialement à partir du bord d'extrémité axiale de grand diamètre.

Chaque patte 50 est reliée au bord d'extrémité axiale 30 par une paire de découpes arrondies 52 qui augmentent la résistance au cisaillement des pattes 50, en évitant la formation d'amorces de ruptures.

La bague de synchronisation à double cône illustrée aux figures 7 à 10 présente les avantages mentionnés précédemment inhérents à la conception selon l'invention faisant appel à un corps en tôle formé et à des cônes de friction réalisés par moulage d'un matériau de frottement. La réalisation par moulage, permettant d'obtenir des géométries et des concentricités très précises des deux surfaces tronconiques 26 est particulièrement avantageuse lorsqu'on la compare à l'état de la technique dans lequel la bague 20 est massive et dans lequel les deux surfaces 26 doivent être réalisées par usinage.

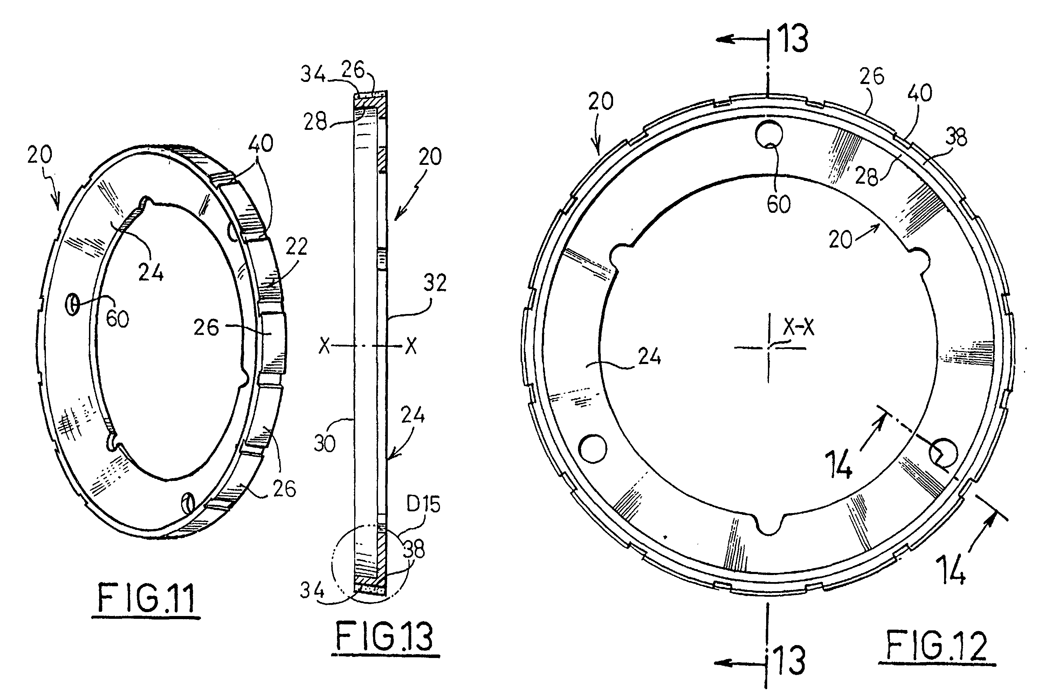

Dans le troisième exemple de réalisation illustré aux figures 11 à 15, la bague de synchronisation 20 est une bague à cône de friction extérieur 26 qui est, conformément aux enseignements de l'invention, réalisée venue de matière par moulage d'une couche 38 de matériau de frottement sur la face latérale externe tronconique 34 d'un corps annulaire tronconique 28 réalisé en tôle par formage.

Dans le mode de réalisation illustré aux figures 11 à 15, les moyens d'entraînement en rotation de la bague de synchronisation 20 sont constitués par une collerette radiale 24 qui s'étend vers l'intérieur, en direction de l'axe X-X, depuis le bord d'extrémité axiale de grand diamètre 32 du corps annulaire 28.

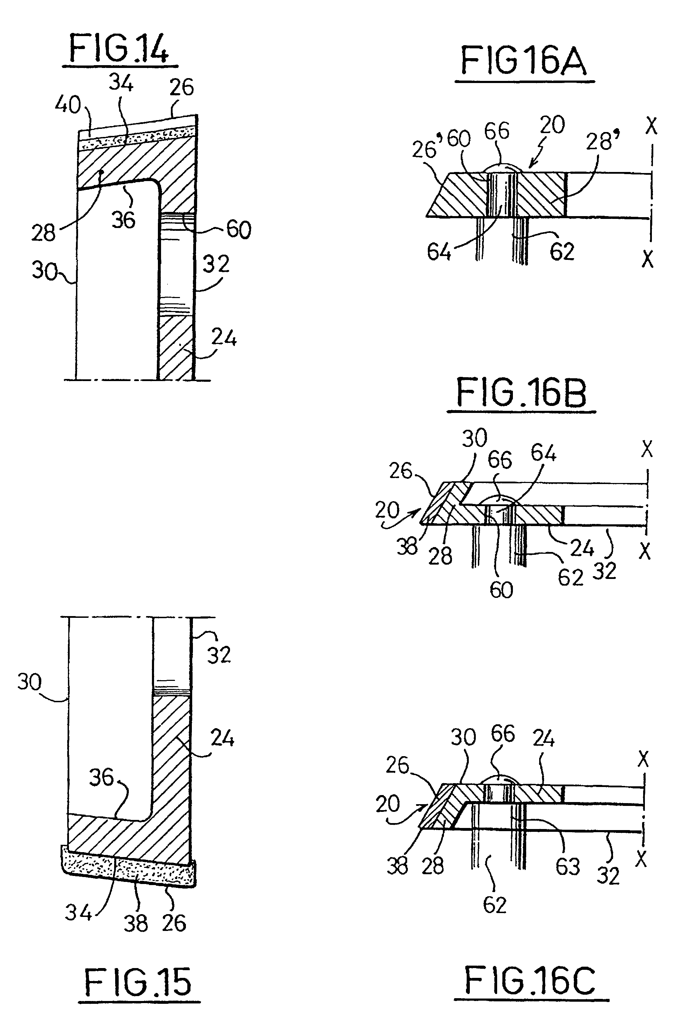

La collerette 24 comporte ici trois trous 60, d'orientation axiale, qui permettent de monter la bague de synchronisation 20 par rivetage sur des colonnettes axiales 62 (voir figure 16B).

Chaque colonnette 62 comporte une extrémité axiale étagée dont la partie cylindrique de plus petit diamètre 64 est reçue à travers un trou 60 et peut être écrasée axialement pour constituer une tête de rivet 66 qui immobilise axialement la collerette 24 par rapport à la colonnette 62.

On a représenté à la figure 16A une bague de synchronisation 20 selon l'état de la technique dont le corps 28' est un corps massif réalisé par usinage qui délimite une surface tronconique de portée 26' également réalisée par usinage.

Comme on peut le voir en comparant la figure 16A à la figure 16B, la bague de synchronisation 20 réalisée conformément aux enseignements de l'invention peut être utilisée en lieu et place d'une bague de synchronisation selon l'état de la technique (figure 16A) sans modification des colonnettes 62.

La bague de synchronisation 20 en tôle emboutie présente une très grande rigidité tout en ayant des caractéristiques géométriques très précises, notamment en ce qui concerne le cône de friction 26.

On a représenté à la figure 16C une variante de réalisation de la bague de synchronisation 20 illustrée aux figures 11 à 15 et à la figure 16B.

Dans cette variante de réalisation, la collerette radiale intérieure 24 s'étend radialement depuis le bord d'extrémité axiale de petit diamètre 30 du corps annulaire tronconique 28.

Cette variante est plus aisée à mettre en oeuvre en ce qui concerne l'emboutissage du corps annulaire 28 et sa collerette 24, dans la mesure où cette pièce métallique ne comporte pas de contre-dépouille, mais elle nécessite de modifier les colonnettes ou de faire appel à des entretoises 63.

Par ailleurs, la rigidité de la bague de synchronisation 20 est légèrement inférieure à celle du mode de réalisation illustré aux figures 11 à 15.

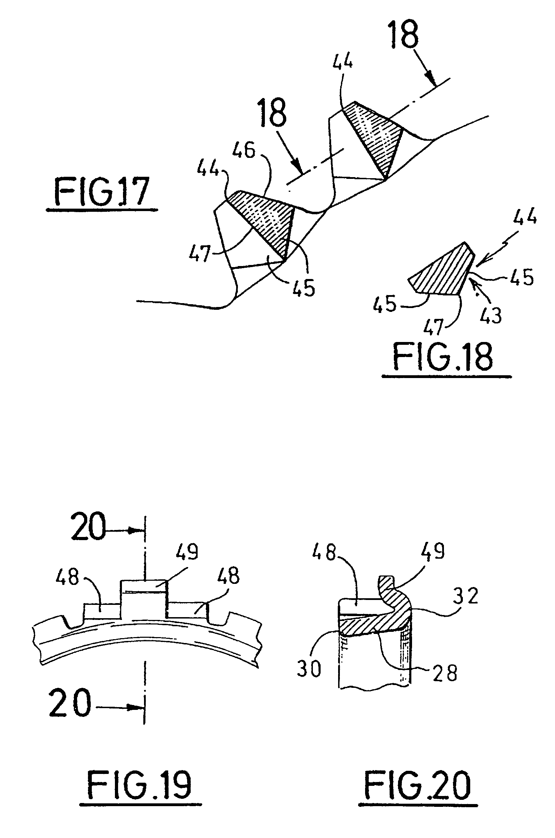

Dans la variante de réalisation illustrée aux figures 17 et 18 les dents 46 d'entraînement en rotation de la bague 20, réalisées par matriçage lors des opérations de découpe et de formage du corps en tôle 28, sont profilées, c'est à dire que leur face latérale 43 tournée axialement vers la pointe du corps tronconique est formée en pointe à deux pans 45 séparées par un bord d'attaque 47 d'orientation radiale.

Dans la variante de réalisation illustrée aux figures 19 et 20, chacune des pattes 48 constituant un bossage d'appui et de positionnement axial de la bague de synchronisation 20, est constituée par deux pattes parallèles 48 entre lesquelles s'étend radialement vers l'extérieur une patte de positionnement 49 qui, comme les pactes 48 d'orientation axiale, sont réalisées par découpe et formage avec le corps 20.

## Revendications

1. Bague (20) de synchronisation pour un synchroniseur de boîte de vitesses du type comportant au moins une surface de portée tronconique (26) susceptible de coopérer par friction avec une surface de portée complémentaire appartenant à un autre composant, dans lequel la surface de portée tronconique (26) appartient à une couche (38) de matériau, notamment de matériau de frottement, rapportée sur un corps (28) de forme générale annulaire tronconique réalisé par formage d'un flan de tôle, **caractérisé en ce que** la couche (38) de matériau est réalisée par surmoulage sur le corps en tôle et **en ce que** la couche (38) de matériau est une couche de matériau moulable de frottement susceptible de coopérer avec une surface de frottement en milieu liquide.

2. Bague de synchronisation selon la revendication 1, **caractérisée en ce que** le corps tronconique en tôle (28) délimite au moins une face latérale tronconique (34, 36) qui est revêtue d'une couche (38) de matériau, d'épaisseur sensiblement constante.

3. Bague de synchronisation selon la revendication 1 ou 2, **caractérisée en ce que** la face latérale tronconique externe (34) du corps (28) est revêtue d'une couche (38) de matériau.

4. Bague de synchronisation selon l'une des revendications 2 ou 3, **caractérisée en ce que** la face latérale tronconique interne (36) du corps (28) est revêtue d'une couche (38) de matériau.

5. Bague de synchronisation selon l'une quelconque des revendications précédentes, **caractérisée en ce que** ladite surface de portée (26) comporte une série de rainures (40), d'orientation sensiblement axiale, formées par moulage dans l'épaisseur de la couche (38) de matériau.

6. Bague de synchronisation selon l'une quelconque des revendications précédentes, **caractérisée en ce que** le corps annulaire tronconique en tôle (28) est délimité axialement par deux bords d'extrémités (30, 32), et **en ce qu'**il comporte au moins une partie fonctionnelle supplémentaire (24, 48, 50), réalisée venue de matière par formage, qui s'étend depuis l'un de ses bords d'extrémités (30, 32).

7. Bague de synchronisation selon la revendication 6, **caractérisée en ce que** ladite partie fonctionnelle est une collerette (24) d'orientation sensiblement radiale.

8. Bague de synchronisation selon la revendication 7, **caractérisée en ce que** la collerette (24) s'étend radialement vers l'extérieur et comporte des dents (46) à sa périphérie (44).

9. Bague de synchronisation selon la revendication 8 prise en combinaison avec la revendication 4, **caractérisée en ce que** la collerette (24) s'étend radialement vers l'extérieur depuis le bord d'extrémité (32) de plus grand diamètre du corps annulaire tronconique (28).

10. Bague de synchronisation selon la revendication 7, **caractérisée en ce que** la collerette (24) s'étend radialement vers l'intérieur et comporte des moyens (60) pour la fixation du corps annulaire tronconique (28) sur un autre élément, notamment sur des moyens (62) d'entraînement en rotation de la bague (20).

11. Bague de synchronisation selon la revendication 10, **caractérisée en ce que** la collerette (24) s'étend radialement vers l'intérieur depuis le bord d'extrémité de plus grand diamètre (32) du corps annulaire tronconique (28).

12. Bague de synchronisation selon la revendication 10, **caractérisée en ce que** la collerette (24) s'étend radialement vers l'intérieur depuis le bord d'extrémité de plus petit diamètre (30) du corps annulaire tronconique (28).

13. Bague de synchronisation selon la revendication 6, **caractérisée en ce que** ladite partie fonctionnelle comporte au moins une patte (48, 50) d'orientation sensiblement axiale.

14. Bague de synchronisation selon la revendication 13 prise en combinaison avec la revendication 4, **caractérisée en ce que** ladite patte (48) s'étend axialement sensiblement le long de la face latérale tronconique externe (34) du corps en tôle (28) pour constituer un bossage d'appui et de positionnement axial de la bague (20).

15. Bague de synchronisation selon la revendication 6, **caractérisée en ce que** ladite partie fonctionnelle comporte au moins une patte (49) d'orientation radiale.

16. Bague de synchronisation selon la revendication 13 prise en combinaison avec les revendications 3 et 4, **caractérisée en ce que** la patte est une patte d'entraînement en rotation de la bague (20) qui s'étend depuis le bord d'extrémité (30) de plus petit diamètre du corps annulaire tronconique (28), en direction de l'axe (X-X) de révolution de la bague de synchronisation.

17. Bague de synchronisation selon l'une quelconque des revendications précédentes, **caractérisée en ce que** le corps annulaire tronconique (28) est réalisé par découpe, emboutissage et/ou repoussage d'un flan de tôle d'acier.

18. Bague de synchronisation selon l'une quelconque des revendications précédentes, **caractérisée en ce qu'**une couche d'adhésif ou de colle est interposée entre le corps annulaire tronconique (28) et la couche de matériau (38).

## Patentansprüche

1. Synchronring (20) für eine Synchronisiereinrichtung eines Schaltgetriebes, umfassend wenigstens eine kegelstumpfartige Auflagefläche (26), die reibschlüssig mit einer zu einem anderen Bestandteil gehörenden komplementären Auflagefläche zusammenwirken kann, wobei die kegelstumpfartige Auflagefläche (26) zu einer Werkstoffbeschichtung (38), insbesondere aus einem Reibwerkstoff, gehört, die auf einem durch Umformung einer Blechscheibe hergestellten Körper (28) mit kegelstumpfartiger ringförmiger Gesamtform aufgebracht ist,
**dadurch gekennzeichnet,**
**daß** die Werkstoffbeschichtung (38) durch Aufformen auf dem Blechkörper ausgeführt ist und daß die Werkstoffbeschichtung (38) eine Beschichtung aus formbarem Reibwerkstoff ist, die mit einer Reibfläche in flüssigem Medium zusammenwirken kann.

2. Synchronring nach Anspruch 1, **dadurch gekennzeichnet, daß** der kegelstumpfartige Blechkörper (28) wenigstens eine kegelstumpfartige Seitenfläche (34, 36) begrenzt, die mit einer Werkstoffbeschichtung (38) mit einer in etwa konstanten Dicke ausgeführt ist.

3. Synchronring nach Anspruch 1 oder 2, **dadurch gekennzeichnet, daß** die äußere kegelstumpfartige Seitenfläche (34) des Körpers (28) mit einer Werkstoffbeschichtung (38) überzogen ist.

4. Synchronring nach einem der Ansprüche 2 oder 3, **dadurch gekennzeichnet, daß** die innere kegelstumpfartige Seitenfläche (36) des Körpers (28) mit einer Werkstoffbeschichtung (38) überzogen ist.

5. Synchronring nach einem der vorangehenden Ansprüche, **dadurch gekennzeichnet, daß** die besagte Auflagefläche (26) eine Reihe von, in etwa axial ausgerichteten Nuten (40) enthält, die durch Formen in der Dicke der Werkstoffbeschichtung (38) ausgebildet sind.

6. Synchronring nach einem der vorangehenden Ansprüche, **dadurch gekennzeichnet, daß** der kegelstumpfartige ringförmige Blechkörper (28) axial durch zwei Abschlußränder (30, 32) begrenzt ist und daß er wenigstens einen einstückig durch Umformung ausgeführten zusätzlichen Funktionsteil (24, 48, 50) umfaßt, der sich von einem seiner Abschlußränder (30, 32) aus erstreckt.

7. Synchronring nach Anspruch 6, **dadurch gekennzeichnet, daß** der besagte Funktionsteil ein in etwa radial ausgerichteter Kragen (24) ist.

8. Synchronring nach Anspruch 7, **dadurch gekennzeichnet, daß** sich der Kragen (24) radial nach außen erstreckt und Zähne (46) an seinem Umfang (44) umfaßt.

9. Synchronring nach Anspruch 8 in Kombination mit Anspruch 4, **dadurch gekennzeichnet, daß** sich der Kragen (24) von dem mit größerem Durchmesser ausgeführten Abschlußrand (32) des kegelstumpfartigen ringförmigen Körpers (28) aus radial nach außen erstreckt.

10. Synchronring nach Anspruch 7, **dadurch gekennzeichnet, daß** sich der Kragen (24) radial nach innen erstreckt und Mittel (60) zur Befestigung des kegelstumpfartigen ringförmigen Körpers (28) an einem anderen Element, insbesondere an Mitteln (62) für den Drehantrieb des Rings (20), umfaßt.

11. Synchronring nach Anspruch 10, **dadurch gekennzeichnet, daß** sich der Kragen (24) von dem mit größerem Durchmesser ausgeführten Abschlußrand (32) des kegelstumpfartigen ringförmigen Körpers (28) aus radial nach innen erstreckt.

12. Synchronring nach Anspruch 10, **dadurch gekennzeichnet, daß** sich der Kragen (24) von dem mit kleinerem Durchmesser ausgeführten Abschlußrand (30) des kegelstumpfartigen ringförmigen Körpers (28) aus radial nach innen erstreckt.

13. Synchronring nach Anspruch 6, **dadurch gekennzeichnet, daß** der besagte Funktionsteil wenigstens einen in etwa axial ausgerichteten Ansatz (48, 50) umfaßt.

14. Synchronring nach Anspruch 13 in Kombination mit Anspruch 4, **dadurch** gekenzeichnet, daß sich der besagte Ansatz (48) in etwa axial entlang der äußeren kegelstumpfartigen Seitenfläche (34) des Blechkörpers (28) erstreckt, um einen Vorsprung zur Auflage und axialen Positionierung des Rings (20) zu bilden.

15. Synchronring nach Anspruch 6, **dadurch gekennzeichnet, daß** der besagte Funktionsteil wenigstens einen radial ausgerichteten Ansatz (49) umfaßt.

16. Synchronring nach Anspruch 13 in Kombination mit den Ansprüchen 3 und 4, **dadurch gekennzeichnet, daß** der Ansatz ein Mitnahzneansatz für den Drehantrieb des Rings (20) ist, der sich von dem mit kleinerem Durchmesser ausgeführten Abschlußrand (30) des kegelstumpfartigen ringförmigen Körpers (28) aus in Richtung der Drehachse (X-X) des Synchronrings erstreckt.

17. Synchronring nach einem der vorangehenden Ansprüche, **dadurch gekennzeichnet, daß** der kegelstumpfartige ringförmige Körper (28) durch Stanzen, Tiefziehen und/oder Drücken einer Stahlblechscheibe ausgeführt ist.

18. Synchronring nach einem der vorangehenden Ansprüche, **dadurch gekennzeichnet, daß** zwischen dem kegelstumpfartigen ringförmigen Körper (28) und der Werkstoffbeschichtung (38) eine Klebstoff- oder Leimschicht eingefügt ist.

## Claims

1. A synchronising ring (20) for a gearbox synchroniser, of the type comprising at least one frustoconical working surface (26) adapted to cooperate by friction with a complementary working surface of another component, wherein the frustoconical working surface (26) is a surface of a layer of material (38), in particular of friction material, which is applied on a body (23) of generally annular frustoconical form fabricated from a sheet metal blank, **characterised in that** the layer of material (38) is formed by moulding it in place on the fabricated body, and **in that** the layer of material (38) is a layer of mouldable friction material adapted to cooperate with a friction surface in a liquid environment.

2. A synchronising ring according to Claim 1, **characterised in that** the frustoconical sheet metal body (28) defines at least one frustoconical lateral face (34, 36) which is coated with a layer of material (38) and which is of substantially constant thickness.

3. A synchronising ring according to Claim 1 or Claim 2, **characterised in that** the external frustoconical lateral face (34) of the body (28) is coated with a layer cf material (38).

4. A synchronising ring according to Claim 2 or Claim 3,
**characterised in that** the internal frustoconical lateral face (36) of the body (28) is coated with a layer of material (38).

5. A synchronising ring according to any one of the preceding Claims, **characterised in that** the said working surface (26) includes a set of grooves (40), oriented substantially axially and formed by moulding within the thickness of the layer of material (38).

6. A synchronising ring according to any one of the preceding Claims, **characterised in that** the annular frustoconical sheet metal body (28) is delimited axially by two terminal edges (30, 32), and **in that** it includes at least one additional working portion (24, 48, 50), formed integrally with the body and projecting from one of its terminal edges (30, 32).

7. A synchronising ring according to Claim 6, **characterised in** chat the said working portion is a substantially radially oriented collar portion (24).

8. A synchronising ring according to Claim 7, **characterised in that** the collar portion (24) extends radially outwards and includes teeth (46) at its periphery (44).

9. A synchronising ring according to Claim 6 taken in combination with Claim 4, **characterised in that** the collar portion (24) extends radially outwards from the terminal edge (32) of the frustoconical annular body (28) having the larger diameter.

10. A synchronising ring according to Claim 7, **characterised in that** the collar portion (24) extends radially inwards, and includes means (60) for fastening the frustoconical annular body (28) on another element, and in particular on means (62) for driving the ring (20) in rotation.

11. A synchronising ring according to Claim 10, **characterised in that** the collar portion (24) extends radially inwards from the terminal edge (32) of the frustoconical annular body (26) having the larger diameter.

12. A synchronising ring according to Claim 10, **characterised in that** the collar portion (24) extends radially inwards from the terminal edge (30) of the frustoconical annular body (28) having the smaller diameter.

13. A synchronising ring according to Claim 6, **characterised in** chat the said working portion includes at least one substantially axially oriented lug (48, 50).

14. A synchronising ring according to Claim 13 taken in combination with Claim 4, **characterised in that** the said lug (43) extends axially substantially along the external frustoconical lateral face (34) of the sheet metal body (28), so as to constitute a boss element for abutment and axial positioning of the ring (20).

15. A synchronising ring according to Claim 6, **characterised in that** the said working portion comprises at least one radially oriented lug (49).

16. A synchronising ring according to Claim 13 taken in combination with Claims 3 and 4, **characterised in that** the lug is a driving lug for driving the ring (20) in rotation, the lug projecting from the terminal edge (30) of the frustoconical annular body (28) having the smaller diameter and towards the axis of revolution (X-X) of the synchronising ring.

17. A synchronising ring according to any one of the preceding Claims, **characterised in that** the frustoconical annular body (28) is formed from steel plate by blanking, stamping and/or drawing of a flat blank.

18. A synchronising ring according to any one of the preceding Claims, **characterised in that** a layer of adhesive, or glue, is interposed between the frustoconical annular body (28) and the layer of material (38).
